(19) Europäisches Patentamt
European Patent Office
Office européen des brevets

(11) **EP 4 589 678 A1**

(12) **EUROPEAN PATENT APPLICATION**

(43) Date of publication:
**23.07.2025 Bulletin 2025/30**

(21) Application number: **24216089.3**

(22) Date of filing: **28.11.2024**

(51) International Patent Classification (IPC):
**H01M 4/131** (2010.01)  **H01M 10/054** (2010.01)
**H01M 4/525** (2010.01)  **H01M 4/505** (2010.01)

(52) Cooperative Patent Classification (CPC):
**H01M 4/131; H01M 10/054;** H01M 4/505;
H01M 4/525; H01M 2004/021; H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.01.2024  JP 2024006068**

(71) Applicant: **Prime Planet Energy & Solutions, Inc.
Chuo-ku, Tokyo 103-0022 (JP)**

(72) Inventor: **TABUSHI, Akihiro
Tokyo, 103-0022 (JP)**

(74) Representative: **Kuhnen & Wacker
Patent- und Rechtsanwaltsbüro PartG mbB
Prinz-Ludwig-Straße 40A
85354 Freising (DE)**

(54) **POSITIVE ELECTRODE ACTIVE MATERIAL AND NON-AQUEOUS ELECTROLYTE SECONDARY BATTERY**

(57)  The present disclosure relates to a positive electrode active material including a small particle group and a large particle group, wherein the small particle group consists of a plurality of small particles (1), the large particle group consists of a plurality of large particles (2), a formula of $1.0 \leq [D1(90) - D1(10)]/D1(50)$ is satisfied, each of the small particles (1) includes a single-particle, a BET specific surface area of the small particles (1) is 0.6 or more and 0.85 or less, each of the large particles (2) includes an aggregated particle, the aggregated particle is formed by aggregation of a plurality of primary particles, and a ratio of a c-axis length to an a-axis length of a crystal lattice of each of the primary particles is 4.9620 or more.

FIG.1

EP 4 589 678 A1

**Description**

CROSS REFERENCE TO RELATED APPLICATIONS

This nonprovisional application is based on Japanese Patent Application No. 2024-006068 filed on January 18, 2024 with the Japan Patent Office, the entire contents of which are hereby incorporated by reference.

BACKGROUND OF THE INVENTION

Field of the Invention

The present disclosure relates to a positive electrode active material and a non-aqueous electrolyte secondary battery including the positive electrode active material.

Description of the Background Art

Japanese Patent Laying-Open No. 2020-35625 proposes positive electrode active material particles for a secondary battery, wherein a particle size distribution width is formed to have a predetermined range in order to suppress volume resistivity from being varied due to large and small particle sizes of the positive electrode active material particles for a secondary battery.

Japanese Patent Laying-Open No. 2018-125305 proposes a production method for obtaining a positive electrode active material including a lithium transition metal oxide particle consisting of a single-particle or having a reduced number of primary particles constituting one secondary particle.

SUMMARY OF THE INVENTION

When each of the positive electrode active materials described in Japanese Patent Laying-Open No. 2020-35625 and Japanese Patent Laying-Open No. 2018-125305 is used for a positive electrode of a non-aqueous electrolyte secondary battery, output resistance of the non-aqueous electrolyte secondary battery may be increased to result in an increased amount of generation of storage gas.

An object of the present disclosure is to provide a positive electrode active material and a non-aqueous electrolyte secondary battery so as to suppress an increase in output resistance and an increase in amount of generation of storage gas.

The present disclosure provides the following positive electrode active material and the following non-aqueous electrolyte secondary battery.

[1] A positive electrode active material comprising a small particle group and a large particle group, wherein

the small particle group consists of a plurality of small particles,
the large particle group consists of a plurality of large particles,
when D1(90), D1(50), and D1(10) are respectively defined as particle sizes corresponding to cumulative particle volumes of 90%, 50%, and 10% of a total particle volume from a small particle size side in a volume-based particle size distribution of the small particle group, the following formula (1) is satisfied:

$$(1) \qquad 1.0 \leq [D1(90) - D1(10)]/D1(50),$$

each of the small particles includes a single-particle,
a BET specific surface area of the small particles is 0.6 or more and 0.85 or less, each of the large particles includes an aggregated particle,
the aggregated particle is formed by aggregation of a plurality of primary particles, and
a ratio of a c-axis length to an a-axis length of a crystal lattice of each of the primary particles is 4.9620 or more.

[2] The positive electrode active material according to [1], wherein the following formula (2) is satisfied:

$$(2) \qquad [D1(90) - D1(10)]/D1(50) \leq 1.4.$$

[3] The positive electrode active material according to [1] or [2], wherein D1(50) is 3 $\mu$m or more and 6 $\mu$m or less.

[4] The positive electrode active material according to any one of [1] to [3], wherein when D2(50) is defined as a particle size corresponding to a cumulative particle volume of 90% of a total particle volume from a small particle size side in a volume-based particle size distribution of the large particle group, D2(50) is 14 μm or more.

[5] A non-aqueous electrolyte secondary battery comprising the positive electrode active material according to any one of [1] to [4].

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a schematic diagram showing an exemplary lithium ion battery according to the present embodiment.
Fig. 2 is a schematic diagram showing an exemplary electrode assembly in the present embodiment.
Fig. 3 is a conceptual diagram showing a positive electrode in the present embodiment.

DESCRIPTION OF THE PREFERRED EMBODIMENTS

Hereinafter, embodiments of the present invention will be described, but the present invention is not limited to the below-described embodiments.

<Positive Electrode Active Material>

A positive electrode active material of the present embodiment is used for a non-aqueous electrolyte secondary battery (hereinafter also referred to as "battery"). Details of the battery will be described later. The positive electrode active material includes a small particle group and a large particle group. The small particle group has a D(50) smaller than that of the large particle group. D(50) is defined as a particle size corresponding to a cumulative particle volume of 50% of a total particle volume from a small particle size side in a volume-based particle size distribution. D(50) of the small particle group and D(50) of the large particle group are also referred to as D1(50) and D2(50), respectively. Dl(50) and D2(50) will be described below. In the volume-based particle size distribution of the positive electrode active material, respective ranges of the particle size distributions of the small particle group and the large particle group do not overlap with each other. The volume-based particle size distribution of the positive electrode active material may be bimodal. The volume-based particle size distribution is measured in accordance with a measurement method described in the below-described section of Examples.

The positive electrode active material may consist essentially of the small particle group and the large particle group. The positive electrode active material may consist of the small particle group and the large particle group. The positive electrode active material may be a powdery material. In the present specification, the expression "consist essentially of..." indicates that an additional component can be included in addition to an essential component to such an extent that the object of the present disclosure is not impaired. For example, a normally conceivable component (such as an inevitable impurity) in the field of the technology may be included as an additional component.

Since the positive electrode active material includes the small particle group and the large particle group, a storage gas tends to be likely to be suppressed from being generated. The positive electrode active material can include the small particle group and the large particle group at a mass ratio of 4:6 to 6:4 (small particle group : large particle group), for example. The positive electrode active material preferably includes the small particle group and the large particle group at a mass ratio of 1:1 (small particle group : large particle group) from the viewpoint of output resistance and an amount of generation of storage gas.

(Small Particle Group)

The small particle group consists of a plurality of small particles. The small particle group is a collection of the small particles. Each of the small particles can have any shape. The small particle may have, for example, a spherical shape, a columnar shape, a lump shape, or the like. It should be noted that in the present specification, an element expressed in a singular form can include a plural form unless otherwise stated particularly. For example, a "particle" can mean not only "one particle" but also a "collection of particles (powdery material, powder, particle group)".

When D1(90), D1(50), and D1(10) are respectively defined as particle sizes corresponding to cumulative particle volumes of 90%, 50%, and 10% of a total particle volume from a small particle size side in a volume-based particle size distribution of the small particle group, the following formula (1) is satisfied:

$$(1) \quad 1.0 \leq [D1(90) - D1(10)]/D1(50).$$

The volume-based particle size distribution is measured in accordance with the method described in the below-described section of Examples. Hereinafter, [D1(90) - D1(10)]/D1(50) on the right side of the formula (1) may also be referred to as "particle size distribution width". When the positive electrode active material satisfies the formula (1), a ratio of the small particles considered to be advantageous for diffusion of lithium (Li) in a solid is increased, with the result that the output resistance tends to be likely to be suppressed from being increased. The particle size [D1(50)] and particle size distribution width of the small particles can be controlled, for example, by selection of particle size (D50) and particle size distribution width of a transition metal compound, which is a source material for the small particles.

From the viewpoint of the output resistance, the left side of the formula (1) is preferably 1.1 or more, is more preferably 1.2 or more, and is further preferably 1.3 or more.

The small particle group can further satisfy, for example, the following formula (2):

$$(2) \quad [D1(90) - D1(10)]/D1(50) \leq 1.4.$$

D1(50) may be, for example, 5 $\mu$m or less, and may be, for example, 3 $\mu$m or more. D1(50) can be controlled by, for example, selection of the particle size (D50) and particle size distribution width of the transition metal compound, which is a source material for the small particles.

Each of the small particles includes a single-particle. The single-particle is a primary particle that has grown to be relatively large. When the small particle is a single-particle, the storage gas tends to be likely to be suppressed from being generated. The single-particle can have any shape. The single-particle may have, for example, a spherical shape, a columnar shape, a lump shape, or the like. The small particle may be formed from one single-particle. The small particle may be formed by aggregation of 2 to 10 single-particles.

The number of the single-particles in the small particle is measured in a SEM (scanning electron microscope) image of the small particle. The magnification of the SEM image is appropriately adjusted in accordance with the size of the particle. The magnification of the SEM image may be, for example, 10000 times to 30000 times.

It should be noted that in the SEM image of the particle, for example, when two single-particles overlap with each other, there is a possibility that the particle on the back side is not confirmed. However, in the present embodiment, the number of single-particles that can be confirmed in the SEM image is regarded as the number of single-particles included in the small particle. The same applies to an aggregated particle described later. The small particle may consist essentially of 1 to 10 single-particles, for example. The small particle may consist of, for example, 1 to 10 single-particles. The small particle may consist of, for example, 1 to 5 single-particles. The small particle may consist of, for example, 1 to 3 single-particles. The small particle may consist of, for example, one single-particle.

The "single-particle" in the present embodiment represents a particle in which no grain boundary can be confirmed on its appearance in the SEM image of the particle, and represents a particle having a first maximum size of 0.5 $\mu$m or more. The first maximum size represents a distance between two points farthest away from each other on a contour line of the single-particle. In the present embodiment, the "contour line of the particle" may be confirmed in a two-dimensional projection image of the particle or in a cross sectional image of the particle. The contour line of the particle may be confirmed, for example, in an SEM image of the powdery material or in a cross sectional SEM image of the particle.

The single-particle may have a first maximum size of, for example, 1 $\mu$m to 7 $\mu$m. The single-particle may have a first maximum size of, for example, 2 $\mu$m to 5 $\mu$m. The single-particle may have a first maximum size of, for example, 2.5 $\mu$m to 3.8 $\mu$m. The average value of the first maximum sizes may be, for example, 1 $\mu$m to 5 $\mu$m. The average value of the first maximum sizes is calculated from the first maximum sizes of 100 single-particles. The 100 single-particles are randomly extracted.

The BET specific surface area of the small particles is 0.6 or more and 0.85 or less. When the BET specific surface area of the small particles including the single-particles falls within the above-described range, the amount of the storage gas is likely to be suppressed from being increased in response to the increase in the ratio of the small particles in the positive electrode active material, with the result that the output resistance of the battery is likely to be suppressed from being increased and the amount of the storage gas is likely to be suppressed from being increased. The BET specific surface area of the small particles is preferably 0.6 or more and 0.8 or less, and is more preferably 0.6 or more and 0.7 or less from the viewpoint of the amount of generation of the storage gas. The BET specific surface area in the present embodiment is measured by a multipoint BET method. The BET specific surface area is measured in accordance with a method described in the below-described section of Examples.

(Large Particle Group)

The large particle group consists of a plurality of large particles. The large particle group is a collection of the large particles. When D2(50) is defined as a particle size corresponding to a cumulative particle volume of 50% of a total particle volume from a small particle size side in a volume-based particle size distribution of the large particle group, D2(50) may be, for example, 12 $\mu$m or more, and may be, for example, 20 $\mu$m or less. D2(50) can be controlled, for example, by selection of the particle size (D50) and particle size distribution width of a transition metal compound, which is a source material for the large particles.

Each of the large particles can have any shape. The large particle may have, for example, a spherical shape, a columnar shape, a lump shape, or the like. The large particle includes an aggregated particle. The large particle may consist essentially of the aggregated particle, for example. The large particle may consist of the aggregated particle, for example. The aggregated particle may be formed by aggregation of 50 or more primary particles. The number of the primary particles included in the aggregated particle is measured in an SEM image of the aggregated particle. The magnification of the SEM image may be, for example, 10000 times to 30000 times. The aggregated particle may be formed by, for example, aggregation of 100 or more primary particles. There is no upper limit for the number of primary particles in the aggregated particle. The aggregated particle may be formed by, for example, aggregation of 10000 or less primary particles. The aggregated particle may be formed by, for example, aggregation of 1000 or less primary particles. Each of the primary particles can have any shape. The primary particle may have, for example, a spherical shape, a columnar shape, a lump shape, or the like.

The aggregated particle may have a particle size of, for example, 10 $\mu$m or more and 25 $\mu$m or less. The particle size of the aggregated particle represents a distance between two points farthest away from each other on a contour line of the aggregated particle. The particle size of the aggregated particle is measured in the SEM image of the aggregated particle. The aggregated particle may have a particle size of, for example, 12 $\mu$m or more and 20 $\mu$m or less. The average value of the particle sizes of the aggregated particles may be, for example, 14 $\mu$m or more and 20 $\mu$m or less. The average value of the particle sizes of the aggregated particles is calculated from the particle sizes of 100 aggregated particles. The 100 aggregated particles are randomly extracted.

The "primary particle" in the present embodiment represents a particle in which no grain boundary can be confirmed on its appearance in the SEM image of the particle, and represents a particle having a second maximum size of less than 0.5 $\mu$m. Each of the primary particles included in the large particle have a particle size smaller than the single-particle included in the small particle. The second maximum size represents a distance between two points farthest away from each other on a contour line of the primary particle. The primary particle may have a second maximum size of 0.05 $\mu$m to 0.2 $\mu$m, for example. When each of 10 or more primary particles randomly extracted from the SEM image of one aggregated particle has a second maximum size of 0.05 $\mu$m to 0.2 $\mu$m, all the primary particles included in the aggregated particle are regarded as having a second maximum size of 0.05 $\mu$m to 0.2 $\mu$m. The primary particle may have a second maximum size of, for example, 0.1 $\mu$m to 0.2 $\mu$m. The average value of the second maximum sizes may be, for example, 0.1 $\mu$m to 0.3 $\mu$m. The average value is calculated from the second maximum sizes of 100 primary particles. The 100 primary particles are randomly extracted.

It should be noted that the aggregated particle may further include a primary particle having a maximum size of 0.5 $\mu$m or more as long as the aggregated particle includes 50 or more primary particles each having a maximum size of less than 0.5 $\mu$m.

A ratio of a c-axis length to an a-axis length of a crystal lattice of each of the primary particles (hereinafter also referred to as "c/a ratio") is 4.9620 or more. When the c/a ratio falls within the above-described range, the amount of generation of storage gas tends to be likely to be suppressed. This is presumably due to the following reason: when the c/a ratio is large, an amount of Li ions in a Li site is considered to be relatively small, and Li that does not enter the crystal forms, on a surface of the positive electrode, a larger amount of a coating layer including a Li compound, with the result that a side reaction with an electrolyte solution, which causes generation of the storage gas, is likely to be suppressed by the coating layer thus generated. The upper limit of the c/a ratio may be, for example, 4.9660 or less, 4.9650 or less, or 4.9640 or less. The c/a ratio is measured in accordance with a method described in the below-described section of Examples. The c/a ratio can be controlled, for example, by adjusting baking parameters (for example, baking time and baking temperature) in a baking step described below.

Each of the small particle (single-particle) and the large particle (primary particle) according to the present embodiment can have any crystal structure. Each of the single-particle and the primary particle may independently have a lamellar structure, a spinel structure, an olivine structure, or the like, for example.

Each of the small particle (single-particle) and the large particle (primary particle) of the present embodiment may independently have any chemical composition. The small particle (single-particle) may have the same chemical composition as that of the large particle (primary particle). The small particle (single-particle) may have a chemical composition different from that of the large particle (primary particle). For example, each of the single-particle and the primary particle may independently include at least one selected from a group consisting of $LiCoO_2$, $LiNiO_2$, $LiMnO_2$,

$LiMn_2O_4$, $Li(NiCoMn)O_2$, $Li(NiCoAl)O_2$, and $LiFePO_4$. Here, for example, the description such as "(NiCoMn)" in the composition formula such as "$Li(NiCoMn)O_2$" indicates that the total of the composition ratios in the parentheses is 1.

For example, each of both the small particle (single-particle) and the large particle (primary particle) may include a lamellar metal oxide. The lamellar metal oxide has a lamellar structure. The lamellar metal oxide may include Ni, for example. The lamellar metal oxide including Ni can have a large specific capacity.

The single-particle (small particle) may include, for example, a first lamellar metal oxide.

The first lamellar metal oxide is represented by the following formula (i):

$$Li_{a1}Ni_{1-b1}M^1{}_{b1}O_2 \qquad (i).$$

In the formula (i),

a1 satisfies a relation of $0.7 \leq a1 \leq 1.3$.
b1 satisfies a relation of $0 < b1 \leq 0.5$.
$M^1$ represents at least one selected from a group consisting of Co, Mn, Al, Zr, Ti, V, Cr, Fe, Cu, Zn, Mo, Sn, Ge, Nb, W, B, Mg, Na, K, Ba, Sr, Ca, and Si.

The first lamellar metal oxide is preferably represented by the following formula (i'):

$$Li_{a1'}Ni_{1-c1-d1}Co_{c1}Mn_{d1}M^{1'}{}_{e1}O_2 \qquad (i').$$

In the formula (i'),

a1' satisfies a relation of $1,00 \leq a1' \leq 1.10$.
c1 satisfies a relation of $0.18 \leq c1 \leq 0.22$.
d1 satisfies a relation of $0.18 \leq c1 \leq 0.22$.
e1 satisfies a relation of $0 \leq e1 \leq 0.10$.
$M^{1'}$ represents at least one selected from a group consisting of Al, Zr, Ti, V, Cr, Fe, Cu, Zn, Mo, Sn, Ge, Nb, W, B, Mg, Na, K, Ba, Sr, Ca, and Si.

The primary particle (large particle) may include, for example, a second lamellar metal oxide.

The second lamellar metal oxide may be represented by the following formula (ii):

$$Li_{a2}Ni_{1-b2}M^2{}_{b2}O_2 \qquad (ii).$$

In the formula (ii),

a2 satisfies a relation of $0.7 \leq a2 \leq 1.3$.
b2 satisfies a relation of $0 < b2 \leq 0.5$.
$M^2$ represents at least one selected from a group consisting of Co, Mn, Al, Zr, Ti, V, Cr, Fe, Cu, Zn, Mo, Sn, Ge, Nb, W, B, Mg, Na, K, Ba, Sr, Ca, and Si.

The second lamellar metal oxide is preferably represented by the following formula (ii'):

$$Li_{a2'}Ni_{1-c2-d2}Co_{c2}2Mn_{d2}M^{2'}{}_{e2}O_2 \qquad (ii').$$

In the formula (ii'),

a2' satisfies a relation of $1.00 \leq a2' \leq 1.10$.
c2 satisfies a relation of $0.18 \leq c2 \leq 0.30$.
d2 satisfies a relation of $0.18 < d2 \leq 0.30$.
e2 satisfies a relation of $0 \leq e2 \leq 0.10$.
$M^{2'}$ represents at least one selected from a group consisting of Al, Zr, Ti, V, Cr, Fe, Cu, Zn, Mo, Sn, Ge, Nb, W, B, Mg, Na, K, Ba, Sr, Ca, and Si.

Each of the single-particle (small particle) and the primary particle (large particle) may independently include, for example, at least one selected from a group consisting of $LiNi_{0.8}Co_{0.1}Mn_{0.1}O_2$, $LiNi_{0.7}Co_{0.2}Mn_{0.1}O_2$, $LiNi_{0.7}Co_{0.1}Mn_{0.2}O_2$, $LiNi_{0.55}Co_{0.2}Mn_{0.25}O_2$, $LiNi_{0.6}Co_{0.2}Mn_{0.2}O_2$, and $LiNi_{0.6}Co_{0.1}Mn_{0.3}O_2$.

(Method of Producing Positive Electrode Active Material)

The positive electrode active material can be produced, for example, by first synthesizing the small particles and the large particles, and then mixing the synthesized small particles and large particles. Each of the small particles and the large particles can be synthesized, for example, through two baking steps. For example, the method of producing the positive electrode active material can include: a first baking step of baking a first mixture including a lithium compound and a transition metal compound; and a second baking step of baking a second mixture including the transition metal compound and a baked material obtained in the first baking step. The crystal structure of each of the small particle and the large particle can be appropriately controlled by adjusting baking parameters (for example, baking temperature and baking time) in each of the first baking step and the second baking step.

The transition metal compound used in the synthesis of each of the small particle and the large particle can include, for example, one or more compounds (hereinafter also referred to as "NCM compounds") each containing nickel (Ni), cobalt (Co), and manganese (Mn). Each of the NCM compounds preferably includes a nickel-cobalt-manganese composite hydroxide. The nickel-cobalt-manganese composite hydroxide may be obtained by, for example, a coprecipitation method or the like. The nickel-cobalt-manganese composite hydroxide may be a compound represented by, for example, the following general formula: $Ni_xCo_yMn_z(OH)_2$ (where $x+y+z = 1$).

The small particles and large particles thus synthesized are mixed at a mass ratio of 4:6 to 6:4 (small particle group : large particle group), preferably at a mass ratio of 1:1, thereby obtaining the positive electrode active material.

<Non-Aqueous Electrolyte Secondary Battery>

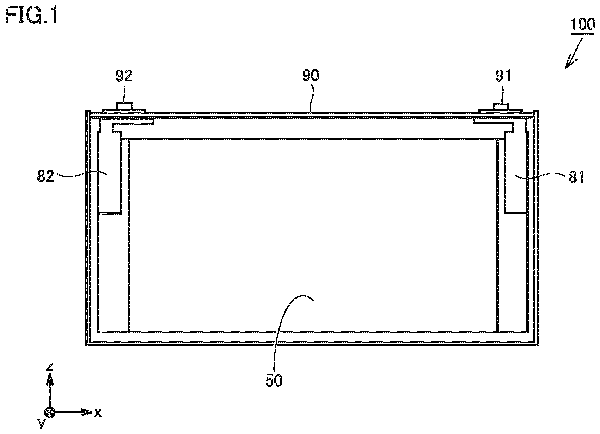

Fig. 1 is a schematic diagram showing an exemplary battery according to the present embodiment. A battery 100 shown in Fig. 1 can be used in any application. Battery 100 may be used as a main electric power supply or a motive power assisting electric power supply in an electrically powered vehicle, for example. A battery module or a battery assembly may be formed by connecting a plurality of batteries 100. Battery 100 may be a lithium ion battery.

Battery 100 includes an exterior package 90. Exterior package 90 has a prismatic shape (flat rectangular parallelepiped shape). It should be noted that the prismatic shape is exemplary. Exterior package 90 may have, for example, a cylindrical shape or a pouch shape. Exterior package 90 may be composed of, for example, an aluminum (Al) alloy. Exterior package 90 accommodates an electrode assembly 50 and an electrolyte (not shown). Electrode assembly 50 is connected to a positive electrode terminal 91 by a positive electrode current collecting member 81. Electrode assembly 50 is connected to a negative electrode terminal 92 by a negative electrode current collecting member 82.

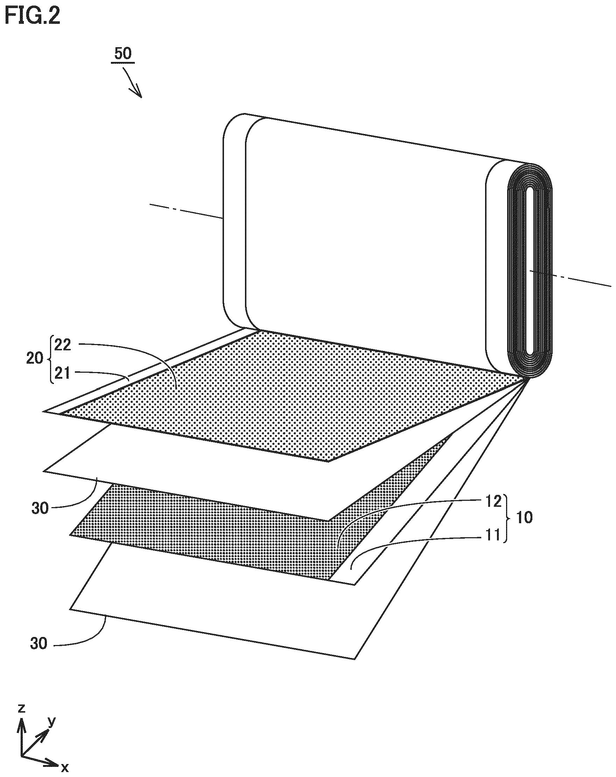

Fig. 2 is a schematic diagram showing an exemplary electrode assembly in the present embodiment. Electrode assembly 50 is a wound type. Electrode assembly 50 includes a positive electrode 10, a separator 30, and a negative electrode 20. That is, battery 100 includes positive electrode 10. Each of positive electrode 10, separator 30, and negative electrode 20 is a sheet in the form of a strip. Electrode assembly 50 may include two separators 30. Electrode assembly 50 is formed by stacking positive electrode 10, separator 30, and negative electrode 20 in this order and winding them in the form of a spiral. Electrode assembly 50 may be shaped to have a flat shape after the winding. It should be noted that the wound type is exemplary. Electrode assembly 50 may be, for example, a stacked (stack) type.

(Positive Electrode)

Positive electrode 10 includes a positive electrode active material layer 12 and a positive electrode substrate 11. Positive electrode active material layer 12 is formed on a surface of positive electrode substrate 11. Positive electrode active material layer 12 may be formed directly on the surface of positive electrode substrate 11. For example, an interposition layer (not shown) may be formed between positive electrode active material layer 12 and positive electrode substrate 11. In the present embodiment, also when the interposition layer is formed, positive electrode active material layer 12 is regarded as being formed on the surface of positive electrode substrate 11. The interposition layer may have a thickness smaller than that of positive electrode active material layer 12. The interposition layer may include a conductive material, an insulating material, or the like, for example. Positive electrode active material layer 12 may be formed only on one surface of positive electrode substrate 11. Positive electrode active material layer 12 may be formed on each of the front and rear surfaces of positive electrode substrate 11.

Positive electrode active material layer 12 may have a thickness of, for example, 10 μm to 200 μm. Positive electrode active material layer 12 can have a high density. Positive electrode active material layer 12 may have, for example, a density of 3.5 g/cm$^3$ or more, a density of 3.6 g/cm$^3$ or more, or a density of 3.7 g/cm$^3$ or more. The upper limit of the density is freely set. Positive electrode active material layer 12 may have a density of, for example, 3.8 g/cm$^3$ or less.

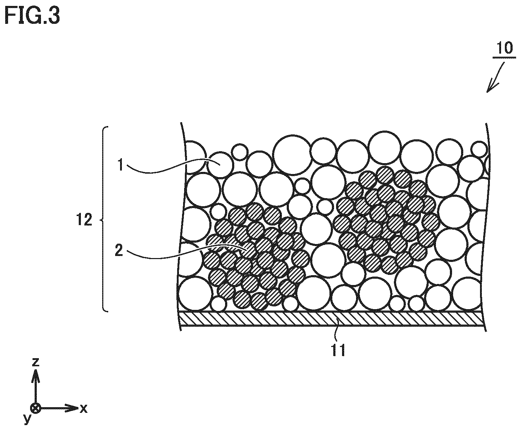

Fig. 3 is a conceptual diagram showing a positive electrode in the present embodiment. Positive electrode active material layer 12 includes the above-described positive electrode active material. The positive electrode active material includes small particles 1 and large particles 2. Each of small particles 1 includes a single-particle. Each of large particles 2 includes an aggregated particle. Small particles 1 and large particles 2 are densely packed. For example, large particles 2 may be distributed in the form of islands in the collection of small particles 1 that spread in the form of sea. Positive electrode active material layer 12 may further include a conductive material (not shown), a binder (not shown), and the like in addition to the positive electrode active material. The conductive material can include any component. The conductive material may include, for example, acetylene black or the like. A blending amount of the conductive material may be, for example, 0.1 part by mass to 10 parts by mass with respect to 100 parts by mass of the positive electrode active material. The binder can include any component. The binder may include, for example, polyvinylidene difluoride (PVdF) or the like. A blending amount of the binder may be, for example, 0.1 part by mass to 10 parts by mass with respect to 100 parts by mass of the positive electrode active material.

Positive electrode substrate 11 is an electrically conductive sheet. Positive electrode substrate 11 may have a thickness of, for example, 10 $\mu$m to 30 $\mu$m. Positive electrode substrate 11 may have a thickness of, for example, 10 $\mu$m to 20 $\mu$m. Positive electrode substrate 11 may have a thickness of, for example, 10 $\mu$m to 15 $\mu$m. Positive electrode substrate 11 may include, for example, an Al foil, a pure Al foil, or the like. Positive electrode substrate 11 may consist essentially of an Al foil, for example. Positive electrode substrate 11 may consist of an Al alloy foil, for example.

Positive electrode 10 is manufactured in the following manner: positive electrode active material layer 12 is formed by applying a positive electrode slurry to a surface of positive electrode substrate 11, positive electrode active material layer 12 and positive electrode substrate 11 are then subjected to rolling to manufacture a raw sheet, and then the raw sheet is cut into a predetermined planar size in accordance with the specification of battery 100. The positive electrode slurry is prepared by mixing the positive electrode active material and an additional component.

(Negative Electrode)

Negative electrode 20 includes a negative electrode active material layer 22 and a negative electrode substrate 21. Negative electrode substrate 21 may include, for example, a copper foil or the like. Negative electrode active material 22 is formed on a surface of negative electrode substrate 21. Negative electrode active material layer 22 includes a negative electrode active material. The negative electrode active material can include any component. The negative electrode active material powder may include, for example, at least one selected from a group consisting of graphite, soft carbon, hard carbon, Si, SiO, Si-based alloy, Sn, SnO, Sn-based alloy, and $Li_4Ti_5O_{12}$. Negative electrode active material layer 22 may further include a binder or the like in addition to the negative electrode active material powder. The binder may include, for example, styrene-butadiene rubber (SBR), carboxymethyl cellulose (CMC), or the like.

Negative electrode 20 is manufactured in the following manner: negative electrode active material layer 22 is formed by applying a negative electrode slurry to a surface of negative electrode substrate 21, negative electrode active material layer 22 and negative electrode substrate 21 are then subjected to rolling to manufacture a raw sheet, and then the raw sheet is cut into a predetermined planar size in accordance with the specification of battery 100. The negative electrode slurry is prepared by mixing the negative electrode active material and another component.

(Separator)

At least a portion of separator 30 is interposed between positive electrode 10 and negative electrode 20. Separator 30 separates positive electrode 10 and negative electrode 20 from each other. Separator 30 is porous. Separator 30 permits the electrolyte solution to pass therethrough. Separator 30 is electrically insulative. Separator 30 may be composed of, for example, polyolefin. It should be noted that when the electrolyte is a solid, the electrolyte may function as a separator.

(Electrolyte)

The electrolyte includes at least one selected from a group consisting of a liquid electrolyte (electrolyte solution or ionic liquid), a gel electrolyte, and a solid electrolyte. In the present embodiment, an electrolyte solution will be described as one example. The electrolyte solution includes a solvent and a supporting electrolyte. The electrolyte solution may further include any additive. The supporting electrolyte is dissolved in the solvent. The solvent is aprotic. The solvent may include at least one selected from a group consisting of ethylene carbonate (EC), propylene carbonate (PC), ethyl methyl carbonate (EMC), dimethyl carbonate (DMC), and diethyl carbonate (DEC), for example. The supporting electrolyte is dissolved in the solvent. The supporting electrolyte can include any component. For example, the supporting electrolyte may include at least one selected from a group consisting of $LiPF_6$, $LiBF_4$, and $LiN(FSO_2)_2$.

Hereinafter, the present invention will be described in more detail with reference to examples.

[Examples]

[Evaluation of Output Resistance]

A battery measurement environment temperature was decreased to 0°C and each of test cells produced in examples of the present disclosure and comparative examples was subjected to constant current charging at a current density of 0.2 mA/cm$^2$ until 3.44 V was attained, was then further subjected to constant voltage charging at 3.49 V until a current density of 0.04 mA/cm$^2$ was attained, and was then subjected to constant current discharging at a current value of 0.2 mA/cm$^2$ for 10 seconds to measure voltage at the time of passage of 10 seconds. The measurement was performed at each of current densities of 0.4, 0.6, 0.8, 1.0, and 1.2 mA/cm$^2$, and a 10-second DC resistance was calculated from the slopes of the current values and the voltage values.

[Evaluation of Amount of Generation of Storage Gas]

A amount of gas in the cell in the above-described discharging state was defined as a pre-storage gas amount. Thereafter, under a temperature condition of 25°C, constant current charging was performed at a current density of 0.2 mA/cm$^2$ until 4.25 V was attained, constant voltage charging was further performed at 4.25 V until a current density of 0.04 mA/cm$^2$ was attained, and then the cell was stored in a thermostatic chamber at 60°C for 30 days. Thereafter, constant current discharging was performed at a current density of 0.2 mA/cm$^2$ until 3.0 V was attained, and then a gas amount was measured to obtain a post-storage gas generation amount. A storage gas amount was measured by excluding the pre-storage gas from the post-storage gas.

[Measurement of BET Specific Surface Area]

The BET specific surface area of the small particles was measured using a full-automatic specific surface area measurement device (Macsorb HM model-1208 provided by MOUNTECH).

[Measurement of Volume-Based Particle Size Distribution]

Volume-based particle size distributions D1(90), D1(50), and D1(10) of the small particles (small particle group) and volume-based particle size distribution D2(50) of the large particles (large particle group) were measured using a laser diffraction type particle size measurement device (Mastersizer-3000 provided by Malvern Panalytical).

[Measurement of c/a Ratio]

The c/a ratio of each of the large particles was measured using a measurement device (full-automatic multipurpose X-ray diffraction device (SmartLab provided by Rigaku). A powdery material sample of the large particles was introduced into a dedicated folder, and crystal peak data obtained by performing measurement in accordance with a reflection method under the following measurement conditions was subjected to Rietveld analysis so as to calculate a-axis length and c-axis length in the crystal (crystal structure: trigonal structure; space group: R-3m), thereby finding the c/a ratio.

(Measurement Conditions)

Vacuum tube (target element): Cu
Tube voltage: 45 kV
Tube current: 200 mA

<Example 1>

(Synthesis of Large Particles)

LiOH and a transition metal compound represented by $Ni_{0.55}Co_{0.20}Mn_{0.25}(OH)_2$ were mixed to obtain a first mixture. The first mixture was baked to obtain a baked material, and then a second mixture including the baked material obtained and the transition metal compound was baked to synthesize the large particles. D2(50) of the large particles (large particle group) was 15.8 μm, and the c/a ratio was 4.9620.

(Synthesis of Small Particles)

LiOH and a transition metal compound represented by $Ni_{0.60}Co_{0.20}Mn_{0.20}(OH)_2$ were mixed to obtain a third mixture. The third mixture was baked to obtain a baked material, and then a fourth mixture including the baked material obtained and the transition metal compound was baked to synthesize the small particles. D1(50) of the small particles (small particle group) was 4.0 μm, the particle size distribution width [[D1(90) - D1(10)]/D1(50)] was 1.367, and the BET specific surface area was 0.68 $m^2$/g.

(Preparation of Positive Electrode Active Material)

The obtained large particles and small particles were mixed at a mass ratio of 1:1 to produce a positive electrode active material.

(Production of Positive Electrode Plate)

Mixing was performed such that the positive electrode active material produced had 97.5 parts by mass, carbon black serving as a conductive material had 1.5 parts by mass, and polyvinylidene difluoride (PVdF) serving as a binder had 1.0 parts by mass, and an appropriate amount of N-methyl-2-pyrrolidone (NMP) was further added, thereby preparing a positive electrode slurry. The slurry was applied to a current collector composed of aluminum foil and the applied film was dried, thereby forming a positive electrode composite material layer. Thereafter, compression was performed to attain a positive electrode composite material density of 3.55 $g/cm^3$ using a compression roller, cutting was performed to attain a predetermined size, and an aluminum tab was attached, thereby forming a positive electrode plate.

<Production of Negative Electrode Plate>

A graphite negative electrode active material, carboxymethyl cellulose (CMC) serving as a thickener, and styrene-butadiene rubber (SBR) serving as a binder were measured in amount to attain a mass ratio of 98:1:1, and were dispersed in water, thereby preparing a negative electrode slurry. The negative electrode composite material slurry was applied to a current collector composed of a copper foil, thereby forming a negative electrode composite material layer. Thereafter, drying was performed, rolling was performed to attain a predetermined thickness using a roller, cutting was performed to attain a predetermined size, and a nickel tab was attached, thereby forming a negative electrode plate.

(Preparation of Non-Aqueous Electrolyte)

Ethylene carbonate (EC), dimethyl carbonate (DMC) and ethyl methyl carbonate (EMC) were mixed at a volume ratio of 30:30:40. Lithium hexafluorophosphate ($LiPF_6$) was added to the mixed solvent to attain a concentration of 1.15 mol/liter. Further, vinylene carbonate (VC) was added to have an addition ratio of 1.0 mass% with respect to the total mass of this mixed solvent, thereby preparing a non-aqueous electrolyte.

(Production of Test Cell)

The positive electrode and the negative electrode were stacked with a separator composed of polyolefin being interposed therebetween, thereby producing a stacked type electrode assembly. This electrode assembly was accommodated in an exterior package composed of an aluminum laminate sheet, the non-aqueous electrolyte above was introduced thereinto, and the opening of the exterior package was then sealed, thereby obtaining a test cell. For the test cell above, constant current charging was performed under a temperature condition of 25°C at a current density of 0.2 $mA/cm^2$ until 4.25 V was attained, and constant voltage charging was further performed at 4.25 V until a current density of 0.04 $mA/cm^2$ was attained, thereby finding a charging capacity. After 10 minutes of resting, constant current discharging was performed at a current density of 0.2 $mA/cm^2$ until 3.0 V was attained, thereby finding a discharging capacity. The test cell was evaluated on the output resistance and the amount of generation of storage gas. Results are shown in Table 1.

<Examples 2 to 4 and Comparative Examples 1 to 3>

Each of test cells was produced in the same manner as in Example 1 except that the small particles and the large particles shown in Table 1 were used. D1(90), D1(50), D1(10) of the small particle group and D2(50) of the large particle group, and the particle size distribution width [[D1(90) - D1(10)]/D1(50)] were controlled by adjusting the particle size (D50) and particle size distribution width of the transition metal compound. The c/a ratio of the crystal lattice of each of the large particles was controlled by adjusting the baking parameters of the baking step.

[Table 1]

| | Small Particles | | Large Particles | Output Resistance [mΩ] | Amount of Generation of Storage Gas [cc] |
|---|---|---|---|---|---|
| | BET Specific Surface Area [m²/g] | [D1(90)-- D1(10)] /D1(50) | c/a Ratio | | |
| Comparative Example 1 | 0.49 | 0.744 | 4.9614 | 0.46 | 3.25 |
| Comparative Example 2 | 0.62 | 0.921 | 4.9617 | 0.43 | 2.80 |
| Example 1 | 0.68 | 1.367 | 4.9620 | 0.41 | 2.59 |
| Example 2 | 0.68 | 1.367 | 4.9632 | 0.40 | 2.11 |
| Example 3 | 0.64 | 1.213 | 4.9623 | 0.39 | 2.17 |
| Example 4 | 0.84 | 1.163 | 4.9625 | 0.38 | 2.61 |
| Comparative Example 3 | 0.84 | 1.163 | 4.1613 | 0.41 | 3.58 |

The output resistance of Comparative Example 1 was higher than that of Example 1. This is presumably because the BET specific surface area and particle size distribution width [[D1(90) - D1(10)]/D1(50)] of the small particles of Comparative Example 1 are smaller than those of Example 1. In Comparative Example 2, both the BET specific surface area and particle size distribution width of the small particles were larger than those of Comparative Example 1; however, the output resistance thereof was higher than that of Example 1.

In Example 1, the BET specific surface area was approximately the same as that of Comparative Example 2; however, by increasing the particle size distribution width and increasing the c/a ratio of the large particles, it was possible to suppress an increase in output resistance and generation of storage gas. In Examples 2 and 3, by adjusting the c/a ratio of the large particles with respect to the BET specific surface area and the particle size distribution width of the small particles, it was possible to attain further improvement in terms of the output resistance and the amount of generation of storage gas.

In Example 4, the particle size distribution width of the small particles was small; however, by increasing the BET specific surface area and increasing the c/a ratio of each of the large particles, it was possible to suppress an increase in output resistance and generation of storage gas. In Comparative Example 4, the same small particles as those in Example 4 were used; however, the c/a ratio was small to result in a large amount of generation of storage gas. It is understood that the c/a ratio of each of the large particles contributes to the amount of generation of storage gas.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

**Claims**

1. A positive electrode active material comprising a small particle group and a large particle group, wherein

   the small particle group consists of a plurality of small particles (1),
   the large particle group consists of a plurality of large particles (2),
   when D1(90), D1(50), and D1(10) are respectively defined as particle sizes corresponding to cumulative particle volumes of 90%, 50%, and 10% of a total particle volume from a small particle size side in a volume-based particle size distribution of the small particle group, the following formula (1) is satisfied:

   $$(1) \quad 1.0 \leq [D1(90) - D1(10)]/D1(50),$$

   each of the small particles (1) includes a single-particle,
   a BET specific surface area of the small particles (1) is 0.6 or more and 0.85 or less,
   each of the large particles (2) includes an aggregated particle,
   the aggregated particle is formed by aggregation of a plurality of primary particles, and
   a ratio of a c-axis length to an a-axis length of a crystal lattice of each of the primary particles is 4.9620 or more.

2. The positive electrode active material according to claim 1, wherein the following formula (2) is satisfied:

$$(2) \qquad [D1(90) - D1(10)]/D1(50) \leq 1.4.$$

3. The positive electrode active material according to claim 1 or 2, wherein D1(50) is 3 $\mu$m or more and 6 $\mu$m or less.

4. The positive electrode active material according to any one of claims 1 to 3, wherein when D2(50) is defined as a particle size corresponding to a cumulative particle volume of 90% of a total particle volume from a small particle size side in a volume-based particle size distribution of the large particle group, D2(50) is 14 $\mu$m or more.

5. A non-aqueous electrolyte secondary battery comprising the positive electrode active material according to any one of claims 1 to 4.

FIG.1

FIG.2

FIG.3

Europäisches
Patentamt

European
Patent Office

Office européen
des brevets

## EUROPEAN SEARCH REPORT

Application Number

EP 24 21 6089

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 846 262 A1 (TANAKA CHEMICAL CORP [JP]) 7 July 2021 (2021-07-07) * paragraphs [0001], [0009], [0024]; figure 2; example 2 * | 1-5 | INV. H01M4/131 H01M10/054 |
| X | EP 3 151 316 B1 (SUMITOMO CHEMICAL CO [JP]; TANAKA CHEMICAL CORP [JP]) 29 November 2023 (2023-11-29) * paragraphs [0008] - [0015], [0035], [0037] * | 1-5 | ADD. H01M4/525 H01M4/505 |

**TECHNICAL FIELDS SEARCHED (IPC)**

H01M

The present search report has been drawn up for all claims

| Place of search | Date of completion of the search | Examiner |
|---|---|---|
| Munich | 30 April 2025 | Lavorenti, Marek |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 6089

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | | Publication date | Patent family member(s) | | Publication date |
|---|---|---|---|---|---|
| EP 3846262 | A1 | 07-07-2021 | CN | 112640165 A | 09-04-2021 |
| | | | EP | 3846262 A1 | 07-07-2021 |
| | | | JP | 7530701 B2 | 08-08-2024 |
| | | | JP | 2020035625 A | 05-03-2020 |
| | | | KR | 20210046688 A | 28-04-2021 |
| | | | US | 2021175502 A1 | 10-06-2021 |
| | | | WO | 2020044795 A1 | 05-03-2020 |
| EP 3151316 | B1 | 29-11-2023 | CN | 106463721 A | 22-02-2017 |
| | | | EP | 3151316 A1 | 05-04-2017 |
| | | | JP | 6549565 B2 | 24-07-2019 |
| | | | JP | WO2015182665 A1 | 20-04-2017 |
| | | | KR | 20170009876 A | 25-01-2017 |
| | | | US | 2017187031 A1 | 29-06-2017 |
| | | | WO | 2015182665 A1 | 03-12-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024006068 A
- JP 2020035625 A
- JP 2018125305 A